# EUROPÄISCHE PATENTSCHRIFT

(11) **EP 2 803 846 B1**
(45) Veröffentlichungstag und Bekanntmachung des Hinweises auf die Patenterteilung: **19.09.2018**
(21) Anmeldenummer: 14000739.4
(22) Anmeldetag: 01.03.2014
(51) Int. Cl.: F02M 27/02, F02M 27/04, F02D 19/06, F02B 3/06, F02B 45/06, F02B 49/00, F02B 51/02

(54) **Antriebsvorrichtung sowie Verfahren zum Betreiben derselben unter Verwendung eines partiell oxidierten Dieselkraftstoffs**
Driving device and method for operating the same using a partially oxidised diesel fuel
Dispositif d'entraînement et procédé de fonctionnement de celui-ci en utilisant un carburant diesel partiellement oxydé

(30) Priorität: 16.05.2013 DE 102013008367
(43) Veröffentlichungstag der Anmeldung: 19.11.2014
(73) Patentinhaber: MAN Truck & Bus AG, 80995 München (DE)
(72) Erfinder: Rothe, Dieter, 90403 Nürnberg (DE)
(74) Vertreter: v. Bezold & Partner Patentanwälte - PartG mbB

(56) Entgegenhaltungen:
- EP-B1- 1 891 309
- DE-A1- 19 924 777
- DE-A1-102010 012 349
- JP-A- S60 113 019
- US-A- 4 002 151
- US-A1- 2004 099 226
- US-A1- 2009 277 432
- US-A1- 2010 300 110

## Beschreibung

Die vorliegende Erfindung betrifft eine Antriebsvorrichtung für Fahrzeuge auf Basis einer Dieselbrennkraftmaschine, in der ein zu verbrennender Kraftstoff zunächst partiell oxidiert und anschließend als Gemisch mit dem nicht oxidierten Kraftstoff in der Dieselbrennkraftmaschine verbrannt wird. Weiterhin betrifft die vorliegende Erfindung ein Verfahren zum Betreiben einer Dieselbrennkraft-maschine unter Einbezug eines zumindest partiell oxidierten Dieselkraftstoffs sowie die Verwendung eines partiell oxidierten Dieselkraftstoffs zur Verminderung der Rußemissionen in der vorstehend beschriebenen Antriebsvorrichtung.

### Stand der Technik

Strategien zur Verminderung von Rußemissionen in Dieselfahrzeugen, insbesondere von Rußfeinstaubpartikeln, sind zurzeit Gegenstand intensiver Forschung. Ursache dafür sind nicht zuletzt die Abgasnormen Euro V und Euro VI, die signifikante Minderungen der Rußemissionen erforderlich machen.

Ein Ansatzpunkt zur Verminderung von Rußpartikelemissionen, die sich in Zusammenhang mit Dieselfahrzeugen in den letzten Jahren durchgesetzt hat und mit der Euro VI Norm festgeschrieben wurde, ist die Verwendung von Dieselpartikelfiltern. Dabei werden Dieselrußpartikel in einem Filtersystem aufgefangen und anschließend durch Erhitzen auf Temperaturen über 250°C zu gasförmigen Abbauprodukten (im Wesentlichen CO₂) umgesetzt. Die Filtration der partikelförmigen Abgasbestandteile stellt nicht das eigentliche Problem dar. Dies besteht eher in der möglichst vollständigen Regeneration des Dieselpartikelfilters, bei der die aufgefangenen Rußpartikel zu gasförmigen Abbauprodukten zersetzt werden müssen.

Bei der Regeneration unterscheidet man zwischen passiver kontinuierlicher Regeneration, die bei Temperaturen ab 250°C abläuft und bevorzugt mit an einem Oxidationskatalysator gebildetem NO₂ gemäß der Umsetzungsformel

2NO₂ + C → CO₂ + 2NO

erfolgt. Zusätzlich dazu muss zumindest in gewissen Abständen eine diskontinuierliche aktive Regeneration, bevorzugt mit Sauerstoff bei Temperaturen von mehr als 450°C, gemäß den im Folgenden dargestellen Umsetzungsformeln erfolgen.

C + O₂ → CO₂

2C + O₂ → 2CO

Für die aktive Regeneration mit Sauerstoff ist in der Regel eine Anhebung der Abgastemperatur erforderlich. Dies kann durch motorische Maßnahmen wie Ansaugluftdrosselung, oder Nacheinspritzung und nachmotorische Maßnahmen wie einen Brenner, eine externe Kraftstoffdosierung, oder externe Heizkatalysatoren erfolgen. Bei den motorischen und nachmotorischen Maßnahmen besteht jedoch das Problem, dass der Partikelfilter für eine aktive Verbrennung auf hohe Temperaturen erhitzt werden muss, wofür das Fahrzeug über eine gewisse Strecke bewegt werden muss. Wenn Fahrzeuge nicht über längere Strecken bewegt werden, können nicht verbrannte Rußrückstände im Filter zu Problemen, insbesondere zu einer Verstopfung des Filters, führen. Zudem sind nachmotorische Maßnahmen häufig mit einem erhöhten Energiebedarf verbunden, der einen höheren Kraftstoffverbrauch der Fahrzeuge zur Folge hat.

Diese Probleme haben dazu geführt, dass vermehrt nach Ansätzen gesucht wird, mit denen sich die Bildung von Ruß in Dieselmotoren *a priori* unterdrücken lässt.

Ein diesbezüglich in der EP 0 590 914 beschriebener Ansatz besteht darin, dem Kraftstoff vor der Verbrennung ein Additiv aus einem Zusatztank beizumischen. Dieses Additiv senkt die Abbrandtemperatur der Rußpartikel im Partikelfilter und erleichtert damit deren Verbrennung.

Zudem können sauerstoffhaltige "Kraftstoffadditive" zur Absenkung der Regenerationstemperatur eingesetzt werden. Der Zusatz von Kraftstoffadditiven ist beispielsweise in DE 10 2009 035 503 A1 oder DE 10 2008 032 254 B4 beschrieben. In der US 2006/180099 A1 oder der WO 2011/126653 A1 werden dem Dieselkraftstoff sauerstoffhaltige Bestandteile wie Ethanol beigemischt, in denen das im Kraftstoff enthaltene Ethanol vor der Verbrennung einer Säure-katalysierten Entwässerung unterzogen wird. Der dadurch gebildete Diethylether weist im Vergleich zu Ethanol deutlich bessere Brenneigenschaften auf, so dass mit Hilfe der Generation des Ethers der Verbrennungsvorgang gesteuert werden kann. Ein mit der Beimischung von Ethanol zu Dieselkraftstoff einhergehendes Problem ist es jedoch, dass sich beide Bestandteile im Tank entmischen können, was den Zusatz weiter Additive zur Stabilisierung der Mischung erforderlich macht. Diese müssen wiederum aufwendig hergestellt und verteilt werden, was zu erheblichen Mehrkosten für den Kraftstoff führt.

Einen alternativen Ansatz verfolgte Bromberg, L. et al. in seinem Beitrag unter dem Titel "Onboard Plasmatron Generation of Hydrogen rich gas for Diesel Engine Exhaust Aftertreatment and Other Applications ", PSFC JA-02-30, vom 11. Dezember 2002. Bei diesem Ansatz wird ein Plasmatronreformer zum Umwandeln von Dieselkraftstoff oder Bioölen in ein wasserstoffreiches Gas verwendet. Die Diesel-Plasmatronreformer-Technologie ist in der Lage nennenswerte Umsätze von Kraftstoff zu Wasserstoff zu liefern, ohne dass ein Katalysator erforderlich ist. Dies wird durch die Verwendung eines speziellen Plasmas für die nichtkatalytische Umwandlung des Dieselkraftstoffs in Wasserstoff erreicht, wobei die Wasserstoffausbeuten für Erzeugung einer NOₓ-Falle ausreichend sind.

Die Umsetzung von Kraftstoff mit einem Plasma wurde auch in der EP 1 891 309 B1 beschrieben, in der ein Teil des im Fahrzeug mitgeführten Kraftstoffs einer Behandlung mit einem Ozon haltigen Luftplasma unterzogen wurde. Durch Einbringen eines Gases wurden dazu die leicht flüchtigen Bestandteile des Diesels verdunstet und mit dem Ozon zur Reaktion gebracht. Die in dieser Reaktion gebildeten Abbauprodukte des Diesels wurden anschließend in den Abgasstrom geleitet, um dort die Nachverbrennung der Rußpartikel zu erleichtern.

Auch in der DE 103 59 395 A1 wird eine Nachverbrennung von Kraftstoffrückständen nach dem Verlassen der Brennkammer beschrieben, bei der ein reduzierendes Gas, wie Wasserstoff, Kohlenmonoxid, Ammoniak oder Kohlenwasserstoffe bzw. Mischungen davon, in den Abgasstrom geleitet wird. Das reduzierende Gas wird dazu zunächst über einem Reaktor "on Board" aus dem mitgeführten Kraftstoff erzeugt, wobei der Reaktor so ausgelegt ist, dass eine Reforming-Spaltung oder ein Crack-Prozess abläuft. Über diesen Prozess wird ein Teil des Kraftstoffs in die genannten Reduktionsmittel umgewandelt, die anschließend zur reduktiven Aschezersetzung in die Abgasleitung geführt werden.

Ein Nachteil von Maßnahmen, die nach der eigentlichen Verbrennung des Kraftstoffs ansetzen, ist es jedoch, dass die Menge des Rußes, der sich originär bildet, nicht beeinflusst wird, d.h. dass die Verbrennung selbst nicht verbessert werden kann. Eine Abgasnachbehandlung ist jedoch in jedem Fall energetisch ungünstiger als eine Steuerung der Verbrennung dahingehend, dass sich weniger Ruß bildet, der dann mit zusätzlichem Aufwand verbrannt werden muss.

Schließlich offenbart die DE 23 65 255 ein Verfahren zur Verringerung der Stickoxidemissionen bei Benzinverbrennungsprozessen, wobei in einer Reformer-Vorrichtung ein Teil des dem Verbrennungsmotor zuzuführenden Kraftstoffs in Zerfall- und Oxidationsprodukte, wie Aldehyde und Ketone, Kohlenmonoxid, Wasserstoff und kurzkettige Kohlenwasserstoffe, umgewandelt und anschließend einem Verbrennungsmotor zugeführt wird. Das zugeführte Gemisch wird dabei insbesondere im Bereich der Zündkerze in den Brennraum des Motors eingebracht und dient als leicht entzündlicher Treibsatz ("fette Mischung"). Diese Mischung wird von den Zündkerzen gezündet, von wo sich die Verbrennung auf das restliche Kraftstoffgemisch ("mageres Gemisch") ausdehnt. Die DE 23 65 255 betrifft jedoch im Wesentlichen konventionelle Otto-Motoren und die Reduktion von Stickoxidemissionen.

Außerdem offenbart die US 4 002 151 ein Verfahren zur Verbesserung der Verbrennung in einer Brennkraftmaschine, wobei oxidierte Produkte in einem Reformer aus Kraftstoff erzeugt werden, und anschließend zusammen mit Luft in eine Brennkammer zugeführt werden.

Trotz der bereits erreichten Fortschritte besteht ein Bedarf an Verfahren und Vorrichtungen, mit denen die Bildung von Rußpartikeln aus Kraftstoffbestandteilen unterdrückt oder zumindest vermindert werden kann, um so eine ungünstige Akkumulation von Ruß in einem nachgeschalteten Dieselrußpartikelfilter zu verhindern. Die vorliegende Erfindung befasst sich mit diesen Problemen.

### Kurze Beschreibung der Zeichnungen

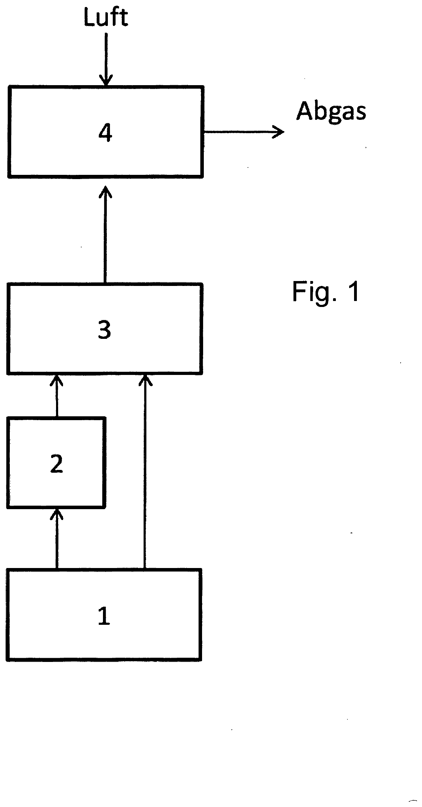

In Figur 1 ist exemplarisch ein Ausführungsbeispiel der vorliegenden Erfindung dargestellt, wobei Kraftstoff dem Kraftstofftank (1) entnommen und einem Reformer (2) zugeführt wird. In dem Reformer erfolgt die Oxidation der Kraftstoff-Kohlenwasserstoffe in sauerstoffhaltige Kohlenwasserstoffe. Diese partiell oxidierten Kohlenwasserstoffe sind weniger lagerstabil als die ursprünglichen Kohlenwasserstoffe und werden in einer Mischereinheit (3) mit dem ursprünglichen Kraftstoff vermischt und anschließend über den Kraftstoffpfad der Verbrennung in der Dieselbrennkraftmaschine (4) zugeführt.

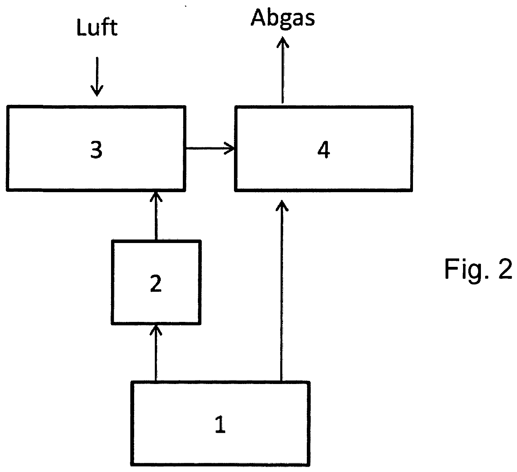

Figur 2 beschreibt ein alternatives Ausführungsbeispiel einer Zudosierung über den Luftpfad. Hierzu wird Kraftstoff aus dem Kraftstofftank (1) entnommen und im Reformer (2) oxidiert. Bei der partiellen Oxidation werden teilweise leicht flüchtige sauerstoffhaltige Kohlenwasserstoffe, d.h. unter anderem Ether, gebildet. Diese können dann in einer Mischereinheit (3) dem Ansaugluftpfad zugeführt werden und so in die Dieselbrennkraftmaschine (4) gelangen.

### Darstellung der Erfindung

Ziel der vorliegenden Erfindung ist es, eine Vorrichtung zur Verfügung zu stellen, bei der die Bildung von Rußpartikeln während des Verbrennungsprozesses so weit wie möglich unterdrückt wird. Ein weiteres Ziel der vorliegenden Erfindung besteht darin, die gebildeten Rußpartikel bereits während ihrer Bildung so zu modifizieren, dass sie in einem anschließenden Rußpartikelfilter leichter und mit geringerem Energieaufwand abgebaut werden können, als dies bei Rußpartikeln aus konventionellen Antriebsvorrichtungen der Fall ist. Ein weiteres Ziel der vorliegenden Erfindung besteht darin, dass dem Dieselkraftstoff möglichst kein zusätzlicher Bestandteil zugemischt werden muss, da dies mit erhöhtem Aufwand die Herstellung und Verteilung solcher Zusatzstoffe (beispielsweise Methanol, Ethanol oder Ähnlichem) einhergeht. Die Bereitstellung von Vorrichtungen, mit denen ein Kraftstoff "on Board", d.h. in einem beweglichen Fahrzeug, so modifiziert werden kann, dass er die vorstehenden Voraussetzungen erfüllt, ist daher ein wesentliches Ziel der vorliegenden Erfindung.

Ein erster Aspekt der vorliegenden Erfindung betrifft demzufolge eine Antriebsvorrichtung für Fahrzeuge, umfassend eine Vorrichtung zur partiellen Oxidation von Kraftstoff (2), einen Kraftstofftank (1) und eine Dieselbrennkraftmaschine (4), wobei die Antriebsvorrichtung dadurch gekennzeichnet ist, dass die Vorrichtung zur partiellen Oxidation von Kraftstoff (2) in Fluidverbindung mit dem Kraftstofftank (1) und der Dieselbrennkraftmaschine (4) steht, so dass zumindest ein Teil des im Fahrzeug mitgeführten Kraftstoffs vor der Verbrennung in der Dieselbrennkraftmaschine einer partiellen Oxidation zugeführt werden kann.

Mit einem "Teil" des Kraftstoffs ist gemeint, dass nicht der gesamte Kraftstoff über die Vorrichtung zur partiellen Oxidation von Kraftstoff der Dieselbrennkraftmaschine zugeleitet wird. Vorzugweise werden nur 50 Vol.-% oder weniger, insbesondere 30 Vol.-% oder weniger und besonders bevorzugt 15 Vol.-% oder weniger des in die Dieselbrennkraftmaschine eingebrachten Kraftstoffs über die Vorrichtung zur partiellen Oxidation von Kraftstoff geleitet. Andererseits ist es erforderlich, so viel Kraftstoff über diese Vorrichtung zu leiten, dass die Effekte der Reduktion der Rußemissionen feststellbar sind. Es ist daher bevorzugt, wenn mindestens 1 Vol.-%, insbesondere mindestens 3 Vol.-%, besonders bevorzugt mindestens 5 Vol.-% und am meisten bevorzugt etwa 10 Vol.-% des Kraftstoffs über die Vorrichtung zur partiellen Oxidation von Kraftstoff geleitet werden.

Die partielle Oxidation von Kohlenwasserstoffen zur Erzeugung von sauerstoffhaltigen Kohlenwasserstoffen ist ein bekannter Prozess und kann auf verschiedene Weise erfolgen. Exemplarisch kommen folgende Oxidationsreaktionen in Betracht:

R'-CH₂-R"+ 1/2 O₂ → R'-CH₂O-R";

R'-CH₂-R"+ O₂ → R'-CO-R" + H₂O;

R'-CH₂-R"+ 1/2 O₂ → R'-CHOH-R",

wobei die Verbindung R'-CH₂-R" einen Bestandteil von konventionellem Diesel darstellt. Wenn im Vorstehenden konventioneller Diesel oder Dieselkraftstoffe erwähnt werden, so sind darunter mineralische Diesel gemäß der Definition EN 590 zu verstehen. Bei R' bzw. R" handelt es sich um einen beliebigen Alkylrest. Weitere Reaktionen, die unter Einbezug von Sauerstoffradikalen mit Kohlenwasserstoffen aus Diesel möglich sind, sind die Folgenden:

R'-CH₂-R" + O → R'-CH₂O-R";

R'-CH₂-R" + 2O → R'-CO-R" + H₂O;

R'-CH₂-R" + O → R'-CHOH-R".

Die Erzeugung der Sauerstoffradikale kann im Rahmen der Erfindung auf verschiedene Weise erfolgen. Bevorzugt werden Sauerstoffradikale jedoch mittels Plasmaentladung, in einem Kraftstoff-Reformer, der einen Katalysator enthalten kann, oder mittelbar über einen Ozonisator (über die Bildung von O₃) erzeugt.

So reagieren bei der Ozonolyse beispielsweise Aromaten mit Ozon zu Glyoxal.

C₆H₆ + 2O₃ → 3 (CHO)₂

Im Rahmen der vorliegenden Erfindung ist es demzfolge bevorzugt, wenn die Vorrichtung zur partiellen Oxidation von Kraftstoff (2) eine Vorrichtung zur Plasmaentladung, einen Kraftstoffreformer, insbesondere mit einem Katalysator, oder einen Ozonisator aufweist. Geeignete Vorrichtung zur Plasmaentladung werden in DE 10 2008 062 417 A1 oder DE 60 2004 004 728 T2 beschrieben. In DE 10 2006 043 128 A1, EP 1 535 660 A1 oder DE 11 2008 001 062 T5 werden Reformer beschrieben. In "Novel process to evaporate liquid fuels and its application to catalytic partial oxidation of diesel", Journal of Power Source, 165 (2007) 210-216 beschreiben die Autoren ein Reformer System zum Verdampfen und Oxidieren von Kraftstoffen mit dem Ziel, möglichst viel Wasserstoff und Kohlenmonoxid zu erhalten. In "Externe Nacheinspritzung zur Regeneration von Dieselpartikelfiltern", Motortechnische Zeitung, 5/2004, 354-361 wird ein System beschrieben indem zur aktiven Regeneration eines rußbeladenen Dieselpartikelfilters über einen externen Kraftsstoffinjektor mittels zudosiertem Diesel an einem Oxidationskatalysator durch vollständige Oxidation des Kraftstoffes eine Exothermie erzeugt wird um den Dieselpartikelfilter (DPF) zu regenerieren. Der verwendete Katalysator weißt üblicherweise eine Formulierung aus Pt in Kombination mit Pd auf. Diese Systeme haben alle das Ziel den Kraftstoff möglichst vollständig zu oxidieren. Ziel der vorliegenden Erfindung ist dagegen, über eine moderate Steuerung der beschriebenen Systeme (niedrigere Temperaturen bzw. weniger aktive Katalysatoren) nur eine partielle Oxidation des Kraftstoffes zu erzielen. D.h., grundsätzlich können die vorstehend beschreibenen Kraftstoffreformer, Vorrichtungen zur Plasmaentladung, etc. im Rahmen der vorliegenden Erfindung verwendet werden, sie müssen aber bei niedrigeren Temperaturen betrieben und/oder mit weniger aktiven Katalysatoren ausgestattet sein, als dies im Stand der Technik beschrieben ist.

Im Rahmen der vorliegenden Erfindung ist es weiterhin bevorzugt, wenn die Oxidation in der Vorrichtung so gesteuert wird, dass der erhaltene partiell oxidierte Kraftstaff nach passieren der Vorrichtung einen Sauerstoffgehalt von mindestens 0,5 Gew.-%, insbesondere mindestens 2 Gew.-% und besonders bevorzugt mindestens 5 Gew.-%, und am meisten bevorzugt mindestens 10 Gew.-% aufweist. Andererseits sollte der Sauerstoffgehalt nach passieren der Vorrichtung nicht zu hoch liegen, da dies eine zu hohe Fragmentierung der Dieselbestandteile in kleine Abbauprodukte zur Folge hat, was die Zündtemperatur des Produkts wesentlich gegenüber dem nicht oxidierten Diesel reduziert. Es ist daher bevorzugt, wenn der Sauerstoffgehalt des partiell oxidierten Karftstoffs nicht mehr als 30 Gew.-%, inbesondere nicht mehr als 15 Gew.-% beträgt.

Die Vorrichtung zur partiellen Oxidation von Kraftstoff (2) ist vorzugsweise so ausgelegt, dass im Rahmen ihres Betriebes aus den gesättigten und/oder ungesättigten Kohlenwasserstoffen im Kraftstoff Ether, Aldehyde, Ketone, Carbonsäuren und/oder Alkohole erzeugt werden. Bei der Reaktionführung der Oxidation ist darauf zu achten, dass möglichst wenige sehr hochentzündliche Oxidationsprodukte (beispielsweise Wasserstoff) gebildet werden. Zudem ist darauf zu achten, dass sich die entstehenden Reaktionsprodukte noch leicht mit den Kohlenwasserstoffen des Dieselkraftstoffs vermischen können. Die Ursache dafür besteht darin dass die Oxidationsprodukte dem Dieselkraftstoff vor dessen Verbrennung beigemischt, oder vor oder gleichzeitig mit diesem in die Brennkammer eingebracht werden müssen. Enthalten die Oxidationsprodukte einen zu hohen Anteil leicht entzündlicher Gase, kann dies im Verbrennungsprozess zu einer vorzeitigen Zündung führen, was eine ungünstigere Verbrennung des eingespritzten Dieselkraftstoffs zur Folge hat.

In einer bevorzugten Ausführungsform steht die Vorrichtung zur partiellen Oxidation von Kraftstoff (2) in Fluidverbindung mit einer Mischereinheit (3), die ihrerseits in Fluidverbindung mit dem Kraftstofftank (1) und der Dieselbrennkraftmaschine (4) steht. Bevorzugt besteht die Fluidverbindung aus Leitungen oder direkten Verbindungen der Mischereinheit zum Kraftstofftank und/oder der Dieselbrennkraftmaschine. Eine derartige Vorrrichtung ist schematisch in Fig. 1 dargestellt.

In einer dazu alternativen weiteren bevorzugten Ausführungsform steht die Vorrichtung zur partiellen Oxidation von Kraftstoff (2) in Fluidverbindung mit einer Mischereinheit (3), die ihrerseits in Fluidverbindung mit der Dieselbrennkraftmaschine (4) steht und über eine Vorrichtung zum Ansaugen von Luft verfügt. Eine derartige Vorrrichtung ist schematisch in Fig. 2 dargestellt. Demzufolge wird der partiell oxidierte Kraftstoff nach Passieren der Vorrichtung zur partiellen Oxidation (2) mit durch die Dieselbrennkraftmaschine (4) angesaugter Luft vermischt, bevor das Gemisch aus Luft und partiell oxidiertem Kraftstoff in die Dieselbrennkraftmaschine (4) eingebracht wird. Vorzugsweise erfolgt das Einbringen vor dem Verdichten und Einspritzen des Dieselkraftstoffs in die Dieselbrennkraftmaschine.

Das Einbringen des Gemischs aus Luft und partiell oxidiertem Kraftstoff kann auch zeitgleich oder kurz vor dem Einspritzen des Kraftstoffs in die Brennkammer erfolgen, wobei die in der Brennkammer vorhandene Luft bereits durch Verdichtung erhitzt sein kann. Für diesen Fall ist es bevorzugt, dass die Mischeinheit (3) derart in Fluidverbindung mit der Dieselbrennkraftmaschine (4) steht, dass das Gemisch aus partiell oxidiertem Kraftstoff und Luft unter Durchmischung mit dem unmodifizierten Kraftstoff in die Brennkammer oder Brennkammern eingebracht wird. Dabei wird vorzugsweise das Gemisch so eingebracht, dass ein möglichst homogenes Gemisch aus oxidiertem Kraftstoff, unmodifiziertem Kraftstoff und Luft gebildet wird.

Im Rahmen der vorliegenden Erfindung ist es weiterhin bevorzugt, wenn die erfindungsgemäße Vorrichtung einen Rußpartikelfilter aufweist, der in Fluidverbindung mit der Dieselbrennkraftmaschine (4) steht und über den die von der Dieselbrennkraftmaschine (4) erzeugten Verbrennungsabgase in die Umgebung abgeleitet werden.

Ein weiterer Aspekt der vorliegenden Erfindung betrifft die Verwendung eines partiell oxidierten Dieselkraftstoffs in einer Antriebsvorrichtung, wie vorstehend beschrieben, zur Verminderung von Rußemissionen. Im Rahmen dieser Verwendung ist es insbesondere bevorzugt, dass die Zusammensetzung von partiell oxidiertem Dieselkraftstoff, nicht oxidiertem Dieselkraftstoff und Luft so eingestellt wird, dass eine Verminderung der Rußbildung bereits in der Brennkammer erzielt wird. Weiterhin ist es zweckmäßig, die Zusammensetzung von partiell oxidiertem Dieselkraftstoff, nicht oxidiertem Dieselkraftstoff und Luft für die Verbrennung so einzustellen, dass der entstehende Ruß chemisch darin gebundene Sauerstoffatome enthält, so dass der Ruß bei niedrigeren Abbrandtemperaturen in einem anschließenden Dieselpartikelfilter zu Kohlendioxid abgebaut werden kann. Referrenzpunkt für die Bestimmung, ob der Ruß bei niedrigeren Abbrandtemperaturen zu Kohlendioxid abgebaut werden kann, ist Ruß, der bei der Verbrennung von ausschließlich nicht partiell oxidiertem Dieselkraffstoff erhalten wird.

Ein weiterer Aspekt der vorliegenden Erfindung betrifft ein Verfahren zum Betreiben einer Dieselbrennkraftmaschine, das die folgenden Schritte aufweist:
a) Bereitstellen eines Dieselkraftstoffs,
b) partielles Oxidieren zumindest eines Teils des Dieselkraftstoffs,
c) Vermischen eines unveränderten Teils des Dieselkraftstoffs mit dem partiell oxidierten Dieselkraftstoff zu einem Gemisch,
d) Einbringen des Gemischs aus c) in eine Brennkammer und Ausführen eines selbstzündenden Verbrennungsprozesses.

Alternativ dazu betrifft die vorliegende Erfindung ebenfalls ein Verfahren zum Betreiben einer Dieselbrennkraftmaschine, das folgende Schritte aufweist:
a) Bereitstellen eines Dieselkraftstoffs,
b) Partielles Oxidieren zumindest eines Teils des Dieselkraftstoffs,
c) Vermischen des oxidierten Teils des Dieselkraftstoffs mit Luft in einer Mischereinheit,
d) Einbringen des Gemischs aus c) in eine Brennkammer, Zuführen von unmodifiziertem Dieselkraftstoff und Ausführen eines selbstzündenden Verbrennungsprozesses.

Das partielle Oxidieren erfolgt in beiden Verfahren zweckmäßig innerhalb der Dieselbrennkraftmaschine, d.h. nicht extern dazu in einer gesonderten Apparatur.

Im Rahmen des vorstehend beschriebenen Verfahrens ist es bevorzugt, wenn das Gemisch in Schritt d) so in die Brennkammer (4) eingebracht wird, dass sich mit dem zugeführten Dieselkraftstoff ein im Wesentlichen homogenes Gemisch bildet.

Weiterhin lässt sich das Verfahren vorteilhaft ausgestalten, indem die im Rahmen der Oxidation aus aliphatischen Kohlenwasserstoffen erhaltenen oxidierten Kohlenwasserstoffe vorzugsweise in Form von Ethern, Aldehyden, Ketonen, Carbonsäuren und Alkoholen vorliegen. Besonders bevorzugt werden im Rahmen des Verfahrens längerkettige aliphatische Kohlenwasserstoffe in partiell oxidierte kleinere Kohlenwasserstoffe umgewandelt. Alternativ oder zusätzlich dazu kann das Verfahren auch so gestaltet werden, dass im Rahmen der Oxidation aus aromatischen Kohlenwasserstoffen oxidierte Kohlenwasserstoffe gebildet werden.

Mit der im Vorstehenden beschriebenen Antriebsvorrichtung werden innerhalb des Verbrennungsvorgangs Rußpartikel erzeugt, die im Vergleich zu Ruß aus konventionellen Dieselkraftstoffen eine höhere Aktivität und damit eine geringere Rußabbrandtemperatur im nachfolgenden Rußpartikelfilter aufweisen. Ohne dass der Anmelder eine bestimmte Theorie als Beleg dafür anführen kann wird davon ausgegangen, dass das Einbringen von Sauerstoff in das Kraftstoffgemisch über die partielle Oxidation von Dieselkohlenwasserstoffen dazu führt, dass Sauerstoff in den entstehenden Ruß eingebunden wird. Dieser Sauerstoff erleichtert durch eine Absenkung der Rußabbrandtemperatur die anschließende Umwandlung der Rußpartikel in Kohlendioxid.

### Beispiel:

An einem Motorenprüfstand wurde Ruß als Verbrennungsrückstand aus mineralischem Diesel und Diesel mit 35 Gew.-% Dipropylenglycoldimethylether- Beimischung gesammelt. Der Sauerstoffgehalt des mineralischen Diesels lag bei etwa 0% während der der Mischung etwa 11 % betrug.

Die Abbrandtemperatur der Ruße wurde mit Hilfe eines Thermogravimetrischen Analysators (TGA) in synthetischem Motorenabgas mit 5 % Sauerstoff bestimmt. Für den Ruß aus reinem mineralischen Diesel wurde eine Abbrandtemperatur von 610°C bestimmt, während die Messung des Rußes aus dem Diesel mit Dipropylenglycoldimethylether-Beimischung eine Abbrandtemperatur von 540°C ergab. Das Gemisch weißt damit eine um 70°C geringere Abbrandtemperatur auf als Ruß aus reinem Diesel.

Die TGA-Abbrandtemperaturen werden über das Maximum der COₓ Emission bestimmt und geben daher nicht die Absolutwerte der Abbrandtemperaturen im Partikelfilter wieder. Relativ sind die Ergebnisse aus dem TGA-Experiment aber auf die Partikelfilter übertragbar.

Die erfindungsgemäße Antriebsvorrichtung und/oder die erfindungsgemäßen Verfahren zum Betreiben einer Dieselbrennkraftmaschine finden vorzugsweise in Fahrzeugen und besonders bevorzugt in Nutzfahrzeugen ihre Anwendung.

## Patentansprüche

1. Verfahren zum Betreiben einer Dieselbrennkraftmaschine, das folgende Schritte aufweist:
a) Bereitstellen eines Dieselkraftstoffs,
b) Partielles Oxidieren zumindest eines Teils des Dieselkraftstoffs in einer Vorrichtung zur partiellen Oxidation von Kraftstoff (2),
c) Vermischen eines unveränderten Teil des Dieselkraftstoffs mit dem partiell oxidierten Dieselkraftstoff zu einem Gemisch,
d) Einbringen des Gemischs aus c) in eine Brennkammer und Ausführen eines selbstzündenden Verbrennungsprozesses.
**dadurch gekennzeichnet, dass** das partielle Oxidieren so ausgelegt ist, dass sauerstoffhaltige Kohlenwasserstoffe erzeugt werden.

2. Verfahren zum Betreiben einer Dieselbrennkraftmaschine, das folgende Schritte aufweist:
a) Bereitstellen eines Dieselkraftstoffs,
b) Partielles Oxidieren zumindest eines Teils des Dieselkraftstoffs in einer Vorrichtung zur partiellen Oxidation von Kraftstoff (2),
c) Vermischen des oxidierten Teils des Dieselkraftstoffs mit Luft in einer Mischereinheit,
d) Einbringen des Gemischs aus c) in eine Brennkammer, Zuführen von unmodifiziertem Dieselkraftstoff und Ausführen eines selbstzündenden Verbrennungsprozesses, **dadurch gekennzeichnet, dass** das Gemisch im Schritt d) so in die Brennkammer (4) eingebracht wird, dass sich mit dem zugeführten unmodifizierten Dieselkraftstoff ein im Wesentlichen homogenes Gemisch bildet, und wobei das partielle Oxidieren so ausgelegt ist, dass sauerstoffhaltige Kohlenwasserstoffe erzeugt werden.

3. Verfahren nach einem der Ansprüche 1 oder 2, **dadurch gekennzeichnet, dass** im Rahmen der Oxidation aus aliphatischen Kohlenwasserstoffen oxidierte Kohlenwasserstoffe in Form von Ethern, Aldehyden, Ketonen, Carbonsäuren und Alkoholen, gebildet werden.

4. Verfahren nach einem der Ansprüche 1 oder 2, **dadurch gekennzeichnet, dass** im Rahmen der Oxidation aus aromatischen Kohlenwasserstoffen oxidierte Kohlenwasserstoffe gebildet werden.

5. Verfahren nach einem der Ansprüche 1 bis 4, wobei das Verfahren in einer Antriebsvorrichtung für Fahrzeuge durchgeführt wird, die eine Vorrichtung zur partiellen Oxidation von Kraftstoff (2), einen Kraftstofftank (1) und eine Dieselbrennkraftmaschine (4), **dadurch gekennzeichnet, dass** die Vorrichtung zur partiellen Oxidation von Kraftstoff (2) in Fluidverbindung mit dem Kraftstofftank (1) und der Dieselbrennkraftmaschine (4) steht, so dass zumindest ein Teil des Kraftstoffs aus dem Kraftstofftank vor der Verbrennung in der Dieselbrennkraftmaschine einer partiellen Oxidation zugeführt werden kann, wobei
- die Vorrichtung zur partiellen Oxidation von Kraftstoff (2) in Fluidverbindung mit einer Mischereinheit (3) steht, die ihrerseits in Fluidverbindung mit dem Kraftstofftank (1) und der Dieselbrennkraftmaschine (4) steht, oder
- die Vorrichtung zur partiellen Oxidation von Kraftstoff (2) in Fluidverbindung mit einer Mischereinheit (3) steht, die ihrerseits in Fluidverbindung mit der Dieselbrennkraftmaschine (4) steht und über eine Vorrichtung zum Ansaugen von Luft verfügt, und die Mischereinheit (3) derart in Fluidverbindung mit der Dieselbrennkraftmaschine (4) steht, dass das Gemisch aus partiell oxidiertem Kraftstoff und Luft unter Durchmischung mit dem unmodifizierten Kraftstoff in die Brennkammer oder Brennkammern eingebracht wird.

6. Verfahren nach Anspruch 5, wobei die Vorrichtung zur partiellen Oxidation von Kraftstoff (2) eine Vorrichtung zur Plasmaentladung, einen Kraftstoff-Reformer, insbesondere mit einen Katalysator, oder einen Ozonisator enthält.

7. Verfahren nach Anspruch 5 oder 6, wobei die Vorrichtung zur partiellen Oxidation von Kraftstoff (2) zur Erzeugung von Ethern, Aldehyden, Ketonen, Carbonsäuren und Alkoholen ausgelegt ist.

8. Verfahren nach Anspruch 5, zweite Alternative, wobei die Mischereinheit (3) derart in Fluidverbindung mit der Dieselbrennkraftmaschine (4) steht, dass das Gemisch aus partiell oxidiertem Kraftstoff und Luft unter Durchmischung mit dem unmodifizierten Kraftstoff in den oder die Zylinder eingebracht wird, wobei vorzugsweise bei der Durchmischung ein homogenes Gemisch gebildet wird.

9. Verfahren nach einem der Ansprüche 5 bis 8, **dadurch gekennzeichnet, dass** die Vorrichtung weiterhin einen Rußpartikelfilter aufweist, der mit der Dieselbrennkraftmaschine (4) verbunden ist.

## Claims

1. Process for operating a diesel internal combustion engine comprising the following steps:
a) providing a diesel fuel,
b) partially oxidizing at least a portion of the diesel fuel in a device for the partial oxidation of fuel (2),
c) mixing an unmodified portion of the diesel fuel with the partially oxidized diesel fuel to afford a mixture,
d) introducing the mixture from c) into a combustion chamber and implementing an auto-igniting combustion process,
**characterized in that** the partial oxidation is configured such that oxygen-containing hydrocarbons are generated.

2. Process for operating a diesel internal combustion engine comprising the following steps:
a) providing a diesel fuel,
b) partially oxidizing at least a portion of the diesel fuel in a device for the partial oxidation of fuel (2),
c) mixing the oxidized portion of the diesel fuel with air in a mixing unit,
d) introducing the mixture from c) into a combustion chamber, feeding in unmodified diesel fuel and implementing an auto-igniting combustion process, **characterized in that**
the mixture in step d) is introduced into the combustion chamber (4) such that a substantially homogeneous mixture is formed with the unmodified diesel fuel that has been fed in, and wherein the partial oxidation is configured such that oxygen-containing hydrocarbons are generated.

3. Process according to either of Claims 1 or 2, **characterized in that**, in the context of the oxidation of aliphatic hydrocarbons, oxidized hydrocarbons are formed in the form of ethers, aldehydes, ketones, carboxylic acids and alcohols.

4. Process according to either of Claims 1 or 2, **characterized in that**, in the context of the oxidation of aromatic hydrocarbons, oxidized hydrocarbons are formed.

5. Process according to any of Claims 1 to 4, wherein the process is carried out in a driving device for vehicles, which a device for the partial oxidation of fuel (2), a fuel tank (1) and a diesel internal combustion engine (4), **characterized in that** the device for the partial oxidation of fuel (2) is in fluid connection with the fuel tank (1) and the diesel internal combustion engine (4), such that at least a portion of the fuel from the fuel tank can be fed to a partial oxidation prior to combustion in the diesel internal combustion engine, wherein
- the device for the partial oxidation of fuel (2) is in fluid connection with a mixing unit (3), which in turn is in fluid connection with the fuel tank (1) and the diesel internal combustion engine (4), or
- the device for the partial oxidation of fuel (2) is in fluid connection with a mixing unit (3), which in turn is in fluid connection with the diesel internal combustion engine (4) and has a device for aspirating air, and the mixing unit (3) is in fluid connection with the diesel internal combustion engine (4) in such a manner that the mixture of partially oxidized fuel and air whilst mixing with the unmodified fuel is introduced into the combustion chamber or combustion chambers.

6. Process according to Claim 5, wherein the device for the partial oxidation of fuel (2) comprises a device for plasma discharge, a fuel reformer, especially with a catalyst, or an ozonizer.

7. Process according to Claim 5 or 6, wherein the device for the partial oxidation of fuel (2) is configured to generate ethers, aldehydes, ketones, carboxylic acids and alcohols.

8. Process according to Claim 5, second alternative, wherein the mixing unit (3) is in fluid connection with the diesel internal combustion engine (4) in such a manner that the mixture of partially oxidized fuel and air whilst mixing with the unmodified fuel is introduced into the cylinder(s), wherein a homogeneous mixture is formed during the mixing.

9. Process according to any of Claims 5 to 8, **characterized in that** the device further comprises a particulate filter which is connected to the diesel internal combustion engine (4).

## Revendications

1. Procédé pour le fonctionnement d'un moteur diesel, qui présente les étapes suivantes :
a) mise à disposition d'un carburant diesel,
b) oxydation partielle d'au moins une partie du carburant diesel dans un dispositif pour l'oxydation partielle de carburant (2),
c) mélange d'une partie non modifiée du carburant diesel avec le carburant diesel partiellement oxydé en un mélange,
d) introduction du mélange de c) dans une chambre de combustion et réalisation d'un procédé de combustion à allumage par compression
**caractérisé en ce que** l'oxydation partielle est conçue de manière telle que des hydrocarbures contenant de l'oxygène sont obtenus.

2. Procédé pour le fonctionnement d'un moteur diesel, qui présente les étapes suivantes :
a) mise à disposition d'un carburant diesel,
b) oxydation partielle d'au moins une partie du carburant diesel dans un dispositif pour l'oxydation partielle de carburant (2),
c) mélange de la partie oxydée du carburant diesel avec de l'air dans une unité de mélange,
d) introduction du mélange de c) dans une chambre de combustion, alimentation de carburant diesel non modifié et réalisation d'un procédé de combustion à allumage par compression
**caractérisé en ce que** le mélange dans l'étape d) est introduit dans la chambre de combustion (4) de manière telle qu'il se forme, avec le carburant diesel non modifié alimenté, un mélange essentiellement homogène et l'oxydation partielle étant conçue de manière telle que des hydrocarbures contenant de l'oxygène sont obtenus.

3. Procédé selon l'une quelconque des revendications 1 ou 2, **caractérisé en ce que** dans le cadre de l'oxydation, des hydrocarbures oxydés sous forme d'éthers, d'aldéhydes, de cétones, d'acides carboxyliques et d'alcools sont formés à partir d'hydrocarbures aliphatiques.

4. Procédé selon l'une quelconque des revendications 1 ou 2, **caractérisé en ce que** dans le cadre de l'oxydation, des hydrocarbures oxydés sont formés à partir d'hydrocarbures aromatiques.

5. Procédé selon l'une quelconque des revendications 1 à 4, le procédé étant réalisé dans un dispositif d'entraînement pour des véhicules, qui un dispositif pour l'oxydation partielle de carburant (2), un réservoir à carburant (1) et un moteur diesel (4), **caractérisé en ce que** le dispositif pour l'oxydation partielle de carburant (2) est en liaison fluidique avec le réservoir à carburant (1) et le moteur diesel (4) de manière telle qu'au moins une partie du carburant peut être introduite dans une oxydation partielle avant la combustion dans le moteur diesel,
- le dispositif pour l'oxydation partielle de carburant (2) étant en liaison fluidique avec une unité de mélange (3) qui est à son tour en liaison fluidique avec le réservoir à carburant (1) et le moteur diesel (4) ou
- le dispositif pour l'oxydation partielle de carburant (2) étant en liaison fluidique avec une unité de mélange (3) qui est à son tour en liaison fluidique avec le moteur diesel (4) et disposant d'un dispositif pour aspirer de l'air et l'unité de mélange (3) étant en liaison fluidique avec le moteur diesel (4) de manière telle que le mélange de carburant partiellement oxydé et d'air est introduit tout en le mélangeant avec le carburant non modifié dans la chambre ou les chambres de combustion.

6. Procédé selon la revendication 5, le dispositif pour l'oxydation partielle de carburant (2) contenant un dispositif pour la décharge de plasma, un reformeur de carburant, présentant en particulier un catalyseur, ou un ozonisateur.

7. Procédé selon la revendication 5 ou 6, le dispositif pour l'oxydation partielle de carburant (2) étant conçu pour la production d'éthers, d'aldéhydes, de cétones, d'acides carboxyliques et d'alcools.

8. Procédé selon la revendication 5, deuxième alternative, l'unité de mélange (3) étant en communication fluidique avec le moteur diesel (4) de manière telle que le mélange de carburant partiellement oxydé et d'air est introduit tout en le mélangeant avec le carburant non modifié dans le ou les cylindres, un mélange homogène étant de préférence formé lors du mélange.

9. Procédé selon l'une quelconque des revendications 5 à 8, **caractérisé en ce que** le dispositif présente en outre un filtre à particules de suie qui est raccordé au moteur diesel (4).
